# EUROPÄISCHE PATENTSCHRIFT

(11) **EP 3 844 392 B1**
(45) Veröffentlichungstag und Bekanntmachung des Hinweises auf die Patenterteilung: **06.03.2024**
(21) Anmeldenummer: 19750109.1
(22) Anmeldetag: 01.08.2019
(51) Int. Cl.: F03D 80/70, F16C 17/26, F03D 80/50, F16C 33/20, F16C 33/12

(54) **LAGERANORDNUNG EINES ROTORS EINER WINDKRAFTANLAGE UND WINDKRAFTANLAGE**
BEARING ARRANGEMENT OF A WIND MOTOR ROTOR AND WIND MOTOR
ENSEMBLE DE PALIERS POUR UNE EOLIENNE ET EOLIENNE

(30) Priorität: 27.08.2018 DE 102018120810
(43) Veröffentlichungstag der Anmeldung: 07.07.2021
(73) Patentinhaber: RENK GmbH, 86159 Augsburg (DE)
(72) Erfinder: ROHRMANN, Thorsten, 38271 Binder (DE); WINTER, Lutz, 30880 Laatzen (DE); BRENCHER, Janina, 30629 Hannover (DE); DECKER, Peter, 30163 Hannover (DE)
(74) Vertreter: Wallinger Ricker Schlotter Tostmann
(86) Internationale Anmeldenummer: PCT/EP2019/070807
(87) Internationale Veröffentlichungsnummer: WO 2020/043425

(56) Entgegenhaltungen:
- EP-A1- 3 219 984
- WO-A1-2017/077057
- DE-A1-102016 209 206
- US-A1- 2012 051 915

## Beschreibung

Die Erfindung betrifft eine Lageranordnung eines Rotors einer Windkraftanlage nach dem Oberbegriff des Patentanspruchs 1. Des Weiteren betrifft die Erfindung eine Windkraftanlage mit einer Lageranordnung.

Zur Lagerung eines Rotors einer Windkraftanlage, der mit Rotorblättern der Windkraftanlage gekoppelt ist und von den Rotorblättern der Windkraftanlage angetrieben ist, kommen nach der Praxis bislang ausschließlich Wälzlager zum Einsatz. Im Schadensfall des Wälzlagers muss der komplette Triebstrang zerlegt werden. Dies macht eine komplette Demontage der Windkraftanlage erforderlich.

Aus der WO 2011/127510 ist eine Lageranordnung eines Rotors einer Windkraftanlage bekannt, die Gleitlager nutzt. Die Lageranordnung verfügt über zumindest zwei in axialem Abstand zueinander angeordnete Gleitlager, die aus Gleitlager-Pads zusammengesetzt sind, wobei die Gleitlager in winklig zueinanderstehenden Ebenen angeordnet sind. Die Gleitlager-Pads der Gleitlager, die Gleitlagersegmente bereitstellen, sind auf einer verkippten Laufbahn positioniert, wodurch eine sphärische Form der jeweiligen Gleitfläche erforderlich wird. Eine derartige sphärische Form der jeweiligen Gleitlagerfläche kann nur mit hohem Aufwand hergestellt werden. Ein weiterer Nachteil der WO 2011/127510 besteht in einer groß bauenden Lageranordnung.

Aus der EP 3 219 984 A1 ist eine Lageranordnung eines Rotors einer Windkraftanlage bekannt, durch die eine rotierende Welle in einer feststehenden Welle bzw. einem Gehäuse gelagert wird.

Die Lageranordnung hat gehäuseseitige Axial-Gleitlagersegmente, die sich gegen eine erste axiale Gleitfläche eines Flansches der Welle abstützen. Des Weiteren gehören zu der Lageranordnung weitere gehäuseseitige Axial-Gleitlagersegmente, die sich gegen eine zweite axiale Gleitfläche abstützen, die auf der anderen Seite des Flansches ausgebildet sind. Darüber hinaus hat die bekannte Lageranordnung im Axialabstand der Welle angeordnete Radialgleitlagersegmente, die sich gegen ihnen zugeordnete radiale Gleitflächen der Welle abstützen.

Entsprechend sind die beiden Axial-Gleitlagersegmentanordnungen quasi an ein und demselben Ort innerhalb der Lageranordnung angeordnet und beide wirken auf jeweils eine der beiden axialen Außenflächen des radial einwärts gerichteten Flansches ein.

Im Falle der aus der DE 10 2016 209 206 A1 bekannten Lageranordnung ist der Rotor mittels eines mit ihm fest verbundenen zweiten Lagerrings gelagert. Als eigentliches Lagerelement ist ein fester Maschinenträger vorgesehen, der seinerseits einen ersten Lagerring aufweist. An diesem ersten Lagerring bzw. auf dessen Außenmantelfläche sind zwei Radial-Gleitlager vorgesehen, die in einem Axialabstand zueinander angeordnet sind. Des Weiteren sind an dem Maschinenträger, und zwar an radial auswärts gerichteten Flanschen des ersten Lagerrings zwei einen Axialabstand zueinander aufweisende Axiallager vorgesehen. Sowohl die Axial-Gleitlager als auch die Radial-Gleitlager sind an einem in dem Gehäuse angeordneten Maschinenträger vorgesehen. Die Lageranordnung ist im inneren Hohlraum des zweiten Lagerrings, der fest mit dem Rotor verbunden ist, angeordnet.

Es besteht Bedarf an einer Lageranordnung eines Rotors einer Windkraftanlage, die einfach hergestellt werden kann, im Schadensfall nicht die komplette Demontage der Windkraftanlage erfordert und eine kompakte Bauform aufweist.

Hiervon ausgehend liegt der vorliegenden Erfindung die Aufgabe zugrunde, eine neuartige Lageranordnung eines Rotors einer Windkraftanlage und eine Windkraftanlage mit einer solchen Lageranordnung zu schaffen.

Diese Aufgabe wird durch eine Lageranordnung nach Anspruch 1 gelöst. Die erfindungsgemäße Lageranordnung zur Lagerung des Rotors der Windkraftanlage in einem feststehenden Gehäuse der Windkraftanlage weist zumindest folgende Baugruppen auf: Erstens gehäuseseitige, den Rotorblättern oder einer Nabe zugewandte Axial-Gleitlagersegmente, die an dem Gehäuse angreifen, zusammen mit dem Gehäuse feststehen und sich gegen eine erste axiale Gleitfläche des Rotors abstützen. Zweitens gehäuseseitige, von den Rotorblättern oder der Nabe abgewandte Axial-Gleitlagersegmente, die an dem Gehäuse angreifen, zusammen mit dem Gehäuse feststehen und sich gegen eine zweite axiale Gleitfläche des Rotors abstützen. Drittens gehäuseseitige, den Rotorblättern oder der Nabe zugewandten RadialGleitlagersegmente, die an dem Gehäuse angreifen, zusammen mit dem Gehäuse feststehen und sich gegen eine erste radiale Gleitfläche des Rotors abstützen. Viertens gehäuseseitige, von den Rotorblättern oder der Nabe abgewandte RadialGleitlagersegmente, die an dem Gehäuse angreifen, zusammen mit dem Gehäuse feststehen und sich gegen eine zweite radiale Gleitfläche des Rotors abstützen. Ein axialer Abstand zwischen den axialen Gleitflächen des Rotors, an welchen sich die Axial-Gleitlagersegmente abstützen, definiert eine Lagerlänge l der Lageranordnung. Die radialen Gleitflächen des Rotors, an welchen sich die Radial-Gleitlagersegmente abstützen, definieren einen Lagerdurchmesser d der Lageranordnung. Für ein Verhältnis V=l/d zwischen der Lagerlänge l und dem Lagerdurchmesser d gilt: V≤1. Die radialen Lagerdurchmesser können auch unterschiedlich sein. Der Lagerdurchmesser d könnte auch sein: vorderer Lagerdurchmesser d1+hinterer Lagerdurchmesser d2, wobei d=(d1+d2)/2. In die Welle des Rotors ist etwa in der axialen Mitte der Lageranordnung zwischen den Axial-Gleitlagersegmenten zumindest ein Mannloch eingebracht.

Die erfindungsgemäße Lageranordnung gewährleistet bei kompakter Bauform und einfacher Herstellbarkeit einen individuellen Zugriff auf einzelne Gleitlagersegmente im Schadensfall. Im Schadensfall ist demnach eine komplette Demontage der Windkraftanlage nicht erforderlich.

Bevorzugt gilt für das V=l/d zwischen der Lagerlänge l und dem Lagerdurchmesser d 0,25≤V≤1. Besonders bevorzugt gilt für das V=l/d zwischen der Lagerlänge l und dem Lagerdurchmesser d 0,5≤V≤1. Höchst bevorzugt gilt für das V=l/d zwischen der Lagerlänge l und dem Lagerdurchmesser d 0,6≤V≤0,9, insbesondere 0,7≤V≤0,8. Diese Verhältnisse sind zur Bereitstellung einer kompakten Bauform besonders bevorzugt.

Nach einer vorteilhaften Weiterbildung weisen die Axial-Gleitlagersegmente und die Radial-Gleitlagersegmente jeweils einen Gleitlagerkörper auf, der sich auf der jeweiligen Gleitfläche des Rotors abstützt. Die jeweilige Gleitfläche des Rotors ist metallisch. Der jeweilige Gleitlagerkörper ist zumindest an der Seite, mit welcher sich derselbe an der jeweiligen Gleitfläche des Rotors abstützt, aus PEEK (Polyetheretherketon) oder aus PK (Polyketon) hergestellt. Dann, wenn der Gleitlagerkörper zumindest an derjenigen Seite, mit welcher derselbe sich an der jeweiligen Gleitfläche des Rotors abstützt, aus PEEK oder aus PK besteht, kann eine kompakte Bauform der Lageranordnung besonders vorteilhaft hergestellt werden. Lagerkörper, die zumindest teilweise aus einem derartigen Werkstoff hergestellt sind, können hohe Lagerbelastungen sicher aufnehmen.

Die erfindungsgemäße Windkraftanlage ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Querschnitt einer erfindungsgemäßen Lageranordnung eines Rotors einer Windkraftanlage;
- Fig. 2: ein Detail der Fig. 1;
- Fig. 3: ein weiteres Detail der Fig. 1
- Fig. 4: einen zweiten Querschnitt der erfindungsgemäßen Lageranordnung eines Rotors einer Windkraftanlage.

Die Erfindung betrifft eine Lageranordnung eines Rotors einer Windkraftanlage, der mit Rotorblättern gekoppelt ist. ein solcher Rotor der Windkraftanlage wird auch als Hauptrotor der Windkraftanlage bezeichnet. Des Weiteren betrifft die Erfindung eine Windkraftanlage mit einer Lageranordnung.

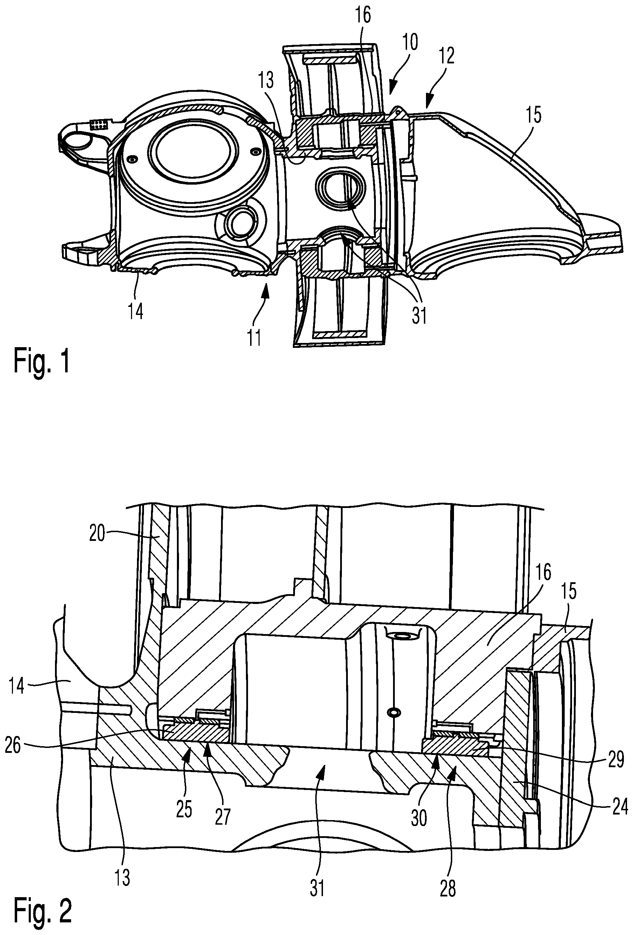

Fig. 1 zeigt einen Ausschnitt aus einer Lageranordnung 10 für einen Rotor 11 einer Windkraftanlage, die der Lagerung des Rotors 11 in einem feststehenden Gehäuse 12 dient.

Vom Rotor 11 sind eine Welle 13 sowie eine mit der Welle 13 verbundene Nabe 14 gezeigt, wobei an der Nabe 14 nicht gezeigte Rotorblätter montiert sind, die vom Wind angetrieben werden. Vom Gehäuse 12 ist ein feststehender Maschinenträger 15 gezeigt, an dem ein Gehäuseabschnitt 16 angreift.

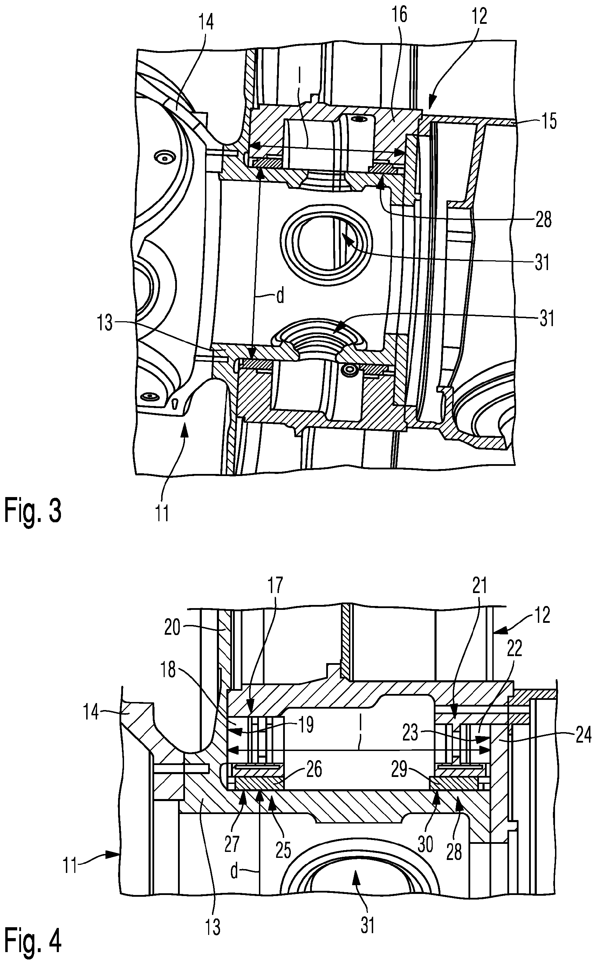

Fig. 2, 3 und 4 zeigen unterschiedliche Details der Lageranordnung 10 gemäß Fig. 1, nämlich unterschiedliche Querschnitte, wobei in Fig. 2 und 3 im dort gewählten Querschnitt Radial-Gleitlagersegmente und in Fig. 4 zusätzlich auch Axial-Gleitlagersegmente sichtbar sind.

Die Lageranordnung 10 verfügt über gehäuseseitige, den Rotorblättern bzw. der Nabe 14 zugewandte Axial-Gleitlagersegmente 17, die einen Gleitkörper 18 umfassen. Der Gleitkörper 18 des jeweiligen Axial-Gleitsegments 17, welches den Rotorblättern bzw. der Nabe 14 zugewandt ist, ist mit dem Gehäuseabschnitt 16 verbunden, steht zusammen mit dem Gehäuseabschnitt 16 fest und stützt sich gegen eine erste axiale Gleitfläche 19 der Welle 13 des Rotors 11 ab, die von einem ersten Axialbund 20 des Rotors 11 gebildet ist. Dieser erste Axialbund 20 ist integraler Bestandteil der Welle 13.

Die Lageranordnung 10 verfügt ferner über gehäuseseitige, von den Rotorblättern bzw. von der Nabe 14 abgewandte Axial-Gleitlagersegmente 21, die wiederum an dem Gehäuseabschnitt 16 des Gehäuses 12 angreifen, zusammen mit dem Gehäuseabschnitt 16 feststehen und deren Gleitkörper 22 sich gegen eine zweite axiale Gleitfläche 23 des Rotors 11 abstützen. Diese zweite axiale Gleitfläche 23 für die Gleitkörper 22 der von der Nabe 14 abgewandten Axial-Gleitsegmente 21 wird von einem weiteren Axialbund 24 bereitgestellt, der nicht integraler Bestandteil der Welle 13 ist, sondern vielmehr mit der Welle 13 fest verbunden ist.

Die Lageranordnung 10 verfügt ferner über Radial-Gleitlagersegmente, nämlich über gehäuseseitige, den Rotorblättern bzw. der Nabe 14 zugewandte Radial-Gleitlagersegmente 25 sowie über gehäuseseitige, von den Rotorblättern bzw. der Nabe 14 abgewandte Radial-Gleitlagersegmente 28. Die Radial-Gleitlagersegmente 25, 28 verfügen jeweils über Gleitkörper 26, 29, die mit dem Gehäuse 12 verbunden sind, wobei die Gleitkörper 26, 29 der gehäuseseitigen Radial-Gleitlagersegmente 25, 28 sich gegen radiale Gleitflächen 27, 30 des Rotors 11, nämlich der Welle 13 des Rotors 11, abstützen.

Ein axialer Abstand zwischen den axialen Gleitflächen 19, 23 des Rotors 11 und damit ein axialer Abstand zwischen den sich an diesen axialen Gleitflächen 19, 23 abstützenden Seiten der Gleitkörper 18, 22 der gehäuseseitigen, den Rotorblättern oder der Nabe 14 zugewandten und den gehäuseseitigen, von den Rotorblättern oder der Nabe 14 abgewandten Axial-Gleitsegmente 17, 21 definiert eine axiale Lagerlänge l der Lageranordnung 10, die insbesondere in Fig. 3 und 4 gezeigt ist. Die radialen Gleitflächen 27 und 30 des Rotors 11, nämlich der Welle 13 des Rotors 11, an welchen sich die Gleitkörper 26, 29 der gehäuseseitigen Radial-Gleitlagersegmente 25, 28 abstützen bzw. die sich an diesen Gleitlagerflächen 27, 30 abstützenden Seiten der Gleitkörper 26, 29 der RadialGleitlagersegmente 25, 28 definieren einen Lagerdurchmesser d der Lageranordnung 10, der ebenfalls insbesondere in Fig. 3 und 4 gezeigt ist.

Für ein Verhältnis V=l/d zwischen dieser Lagerlänge l und diesem Lagerdurchmesser d gilt V≤1.

Bevorzugt gilt für dieses Verhältnis 0,25≤V≤1.

Besonders bevorzugt gilt 0,5≤V≤1.

Höchst bevorzugt gilt 0,6≤V≤0,9, insbesondere 0,7≤V≤0,8.

Die oben beschriebene Lageranordnung 10 eine Rotors 11 einer Windkraftanlage nutzt Gleitlagersegmente 17, 21, 25 und 28. Auf Wälzlager wird verzichtet. Die Gleitlagersegmente, die als Axial-Gleitlagersegmente 17, 21 und Radial-Gleitlagersegmente 25, 28 ausgeführt sind, benötigen keine sphärische Bauform. Die Axial-Gleitlagersegmente 17, 21 und die RadialGleitlagersegmente 25, 28 sind kreisförmig um die Welle 13 bzw. eine Drehachse der Welle 13 herum angeordnet. Es kann eine kompakte Abmessung realisiert werden. Bei kompakten Abmessungen und einfacher Herstellbarkeit kann auf einzelne Gleitlagersegmente individuell zugegriffen werden, ohne dass es erforderlich ist, den Antriebsstrang der Windkraftanlage komplett zu zerlegen. Im Wartungsfall sind die Gleitlagersegmente 17, 21, 25, 28 über mindestens ein sogenanntes Mannloch 31 zugänglich, das oder die in etwa in der axialen Mitte der Lageranordnung 10 zwischen den Axial-Gleitlagersegmente 17, 21 in die Welle eingebracht ist oder sind.

Wie bereits ausgeführt, weisen die Axial-Gleitlagersegmente 17, 21 sowie die Radial-Gleitlagersegmente 25, 28 jeweils einen Gleitlagerkörper 18, 22, 26, 29 auf, der sich auf der jeweiligen Gleitfläche 19, 23, 27, 30 des Rotors 11, nämlich der Welle 13 des Rotors 11, abstützt. Die jeweilige Gleitfläche 19, 23, 27, 30 ist dabei metallisch ausgeführt.

Der jeweilige Gleitlagerkörper 18, 22, 26, 29 weist zumindest an derjenigen Seite, mit welcher sich derselbe an der jeweiligen Gleitfläche 19, 23, 27, 30 des Rotors 11 abstützt, einen PEEK (Polyetheretherketon) oder PK (Polyketon) Werkstoff auf. Derartige Werkstoffe können hohe Lagerbelastungen aufnehmen.

Dabei kann der jeweilige Gleitkörper 18, 22, 26, 29 entweder vollständig aus einem solchen PEEK oder PK Werkstoff bestehen, oder alternativ an der Seite, mit welcher sich derselbe an der jeweiligen Gleitfläche 19, 23, 27, 30 abstützt, ein Segment bzw. eine Beschichtung aus einem derartigen PEEK oder PK Werkstoff tragen, welches bzw. welche dann vorzugsweise auf einen metallischen Grundkörper des jeweiligen Gleitkörper 18, 22, 26, 29 aufgebracht ist.

Die erfindungsgemäße Lageranordnung 10 kommt insbesondere in Windkraftanlagen ohne Getriebe zum Einsatz, die auch als Direct-Drive-Windkraftanlagen bezeichnet werden. Bei derartigen Direct-Drive-Windkraftanlagen ist die Lageranordnung 10, die sehr kurz baut, besondere vorteilhaft.

## Patentansprüche

1. Lageranordnung (10) eines Rotors (11) einer Windkraftanlage, nämlich zur Lagerung einer Welle (13) des Rotors (11) in einem feststehenden Gehäuse (12), wobei die Welle (13) des Rotors insbesondere über eine Nabe (14) mit Rotorblättern des Rotors (11) gekoppelt ist,
mit gehäuseseitigen, den Rotorblättern oder der Nabe (14) zugewandten Axial-Gleitlagersegmenten (17), die an dem Gehäuse (12) angreifen, zusammen mit dem Gehäuse (12) feststehen und sich gegen eine erste axiale Gleitfläche (19) des Rotors (11) abstützen,
mit gehäuseseitigen, von den Rotorblättern oder der Nabe (14) abgewandten Axial-Gleitlagersegmenten (21), die an dem Gehäuse (12) angreifen, zusammen mit dem Gehäuse (12) feststehen und sich gegen eine zweite axiale Gleitfläche (23) des Rotors (11) abstützen,
mit gehäuseseitigen, den Rotorblättern oder der Nabe (14) zugewandten Radial-Gleitlagersegmenten (25), die an dem Gehäuse (12) angreifen, zusammen mit dem Gehäuse (12) feststehen und sich gegen eine erste radiale Gleitfläche (27) des Rotors (11) abstützen,
mit gehäuseseitigen, von den Rotorblättern oder der Nabe (14) abgewandten Radial-Gleitlagersegmenten (28), die an dem Gehäuse (12) angreifen, zusammen mit dem Gehäuse (12) feststehen und sich gegen eine zweite radiale Gleitfläche (30) des Rotors (11) abstützen,
wobei ein axialer Abstand zwischen den axialen Gleitflächen (19, 23) des Rotors (11), an welchen sich die Axial-Gleitlagersegmente (17, 21) abstützen, eine Lagerlänge l der Lageranordnung (10) definiert,
wobei die radialen Gleitflächen (27,30) des Rotors (11), an welchen sich die Radial-Gleitlagersegmente (25, 28) abstützen, einen Lagerdurchmesser d der Lageranordnung (10) definieren,
wobei für ein Verhältnis V=l/d zwischen der Lagerlänge l zwischen den axialen Gleitflächen (19, 23) des Rotors (11) und dem Lagerdurchmesser d der radialen Gleitflächen (27, 30) des Rotors (11) gilt: V≤1, **dadurch gekennzeichnet, dass** in die Welle (13) etwa in der axialen Mitte der Lageranordnung (10) zwischen den Axial-Gleitlagersegmenten (17, 21) zumindest ein Mannloch (31) eingebracht ist.

2. Lageranordnung nach Anspruch 1, **dadurch gekennzeichnet, dass** für das Verhältnis V=l/d zwischen der Lagerlänge l und dem Lagerdurchmesser d gilt: 0,25≤V≤1.

3. Lageranordnung nach Anspruch 1 oder 2, **dadurch gekennzeichnet, dass** für das Verhältnis V=l/d zwischen der Lagerlänge l und dem Lagerdurchmesser d gilt: 0,5≤V≤1.

4. Lageranordnung nach einem der Ansprüche 1 bis 3, **dadurch gekennzeichnet, dass** für das Verhältnis V=l/d zwischen der Lagerlänge l und dem Lagerdurchmesser d gilt: 0,6≤V≤0,9.

5. Lageranordnung nach einem der Ansprüche 1 bis 4, **dadurch gekennzeichnet, dass** für das Verhältnis V=l/d zwischen der Lagerlänge l und dem Lagerdurchmesser d gilt: 0,7≤V≤0,8.

6. Lageranordnung nach einem der Ansprüche 1 bis 5, **dadurch gekennzeichnet, dass**
die Axial-Gleitlagersegmente (17, 21) und RadialGleitlagersegmente (25, 28) jeweils einen Gleitlagerkörper (18, 22, 26, 29) aufweisen, der sich auf der jeweiligen Gleitfläche (19, 23, 27, 30) des Rotors (11) abstützt,
die jeweilige Gleitfläche (19, 23, 27, 30) des Rotors metallisch ist,
der jeweilige Gleitlagerkörper (18, 22, 26, 29) einen vorzugsweise metallischen Grundkörper aufweist, der an einer Seite, mit welcher sich derselbe an der jeweiligen Gleitfläche (19, 23, 27, 30) des Rotors (11) abstützt, eine Beschichtung aus PEEK (Polyetheretherketon) trägt.

7. Lageranordnung nach einem der Ansprüche 1 bis 5, **dadurch gekennzeichnet, dass**
die Axial-Gleitlagersegmente (17, 21) und RadialGleitlagersegmente (25, 28) jeweils einen Gleitlagerkörper (18, 22, 26, 29) aufweisen, der sich auf der jeweiligen Gleitfläche (19, 23, 27, 30) des Rotors (11) abstützt,
die jeweilige Gleitfläche (19, 23, 27, 30) des Rotors metallisch ist,
der jeweilige Gleitlagerkörper (18, 22, 26, 29) vollständig aus PEEK (Polyetheretherketon) besteht.

8. Lageranordnung nach einem der Ansprüche 1 bis 5, **dadurch gekennzeichnet, dass**
die Axial-Gleitlagersegmente (17, 21) und RadialGleitlagersegmente (25, 28) jeweils einen Gleitlagerkörper (18, 22, 26, 29) aufweisen, der sich auf der jeweiligen Gleitfläche (19, 23, 27, 30) des Rotors (11) abstützt,
die jeweilige Gleitfläche (19, 23, 27, 30) des Rotors metallisch ist,
der jeweilige Gleitlagerkörper (18, 22, 26, 29) einen vorzugsweise metallischen Grundkörper aufweist, der an einer Seite, mit welcher sich derselbe an der jeweiligen Gleitfläche (19, 23, 27, 30) des Rotors (11) abstützt, eine Beschichtung aus PK (Polyketon) trägt.

9. Lageranordnung nach einem der Ansprüche 1 bis 5, **dadurch gekennzeichnet, dass**
die Axial-Gleitlagersegmente (17, 21) und RadialGleitlagersegmente (25, 28) jeweils einen Gleitlagerkörper (18, 22, 26, 29) aufweisen, der sich auf der jeweiligen Gleitfläche (19, 23, 27, 30) des Rotors (11) abstützt,
die jeweilige Gleitfläche (19, 23, 27, 30) des Rotors metallisch ist,
der jeweilige Gleitlagerkörper (18, 22, 26, 29) vollständig aus PK (Polyketon) besteht.

10. Windkraftanlage, mit einem Rotor (11) und einem Gehäuse (12) und einer Lageranordnung (10) zur Lagerung einer Welle des Rotors (11) in dem Gehäuse (12), wobei die Welle (13) des Rotors insbesondere über eine Nabe (14) mit Rotorblättern des Rotors (11) gekoppelt ist, **dadurch gekennzeichnet, dass** die Lageranordnung (10) nach einem der Ansprüche 1 bis 9 ausgebildet ist.

11. Windkraftanlage nach Anspruch 10, **dadurch gekennzeichnet, dass** dieselbe eine getriebelose Direct-Drive Windkraftanlage ist.

## Claims

1. A bearing arrangement (10) of a rotor (11) of a wind turbine, namely for supporting a shaft (13) of the rotor (11) in a stationary housing (12), the shaft (13) of the rotor in particular via a hub (14) being coupled with rotor blades of the rotor (11),
with housing-side axial plain bearing segments (17) facing the rotor blades or the hub (14), which engage the housing (12), are stationary together with the housing (12) and are supported against a first axial sliding surface (19) of the rotor (11),
with housing-side axial plain bearing segments (21) facing away from the rotor blades or the hub (14), which engage the housing (12), are stationary together with the housing (12) and are supported against a second axial sliding surface (23) of the rotor (11),
with housing-side radial plain bearing segments (25) facing the rotor blades or the hub (14), which engage the housing (12), are stationary together with the housing (12) and are supported against a first radial sliding surface (27) of the rotor (11),
with housing-side radial plain bearing segments (28) facing away from the rotor blades or the hub (14), which engage the housing (12), are stationary together with the housing (12) and are supported against a second radial sliding surface (30) of the rotor (11),
wherein an axial distance between the axial sliding surfaces (19, 23) of the rotor (11) on which the axial plain bearing segments (17, 21) are supported defines a bearing length I of the bearing arrangement (10),
wherein the radial sliding surfaces (27, 30) of the rotor (11) on which the radial plain bearing segments (25, 28) are supported define a bearing diameter d of the bearing arrangement (10),
wherein for a ratio V=l/d between the bearing length I between the axial sliding surfaces (19, 23) of the rotor (11) and the bearing diameter d of the radial sliding surfaces (27, 30) of the rotor (11) the following applies: V≤1, **characterized in that** at least one manhole (31) is introduced into the shaft (13) approximately in the axial center of the bearing arrangement (10) between the axial plain bearing segments (17, 21).

2. The bearing arrangement according to claim 1, **characterized in that** the following applies to the ratio V=l/d between the bearing length I and the bearing diameter d: 0,25≤V≤1.

3. The bearing arrangement according to claim 1 or 2, **characterized in that** the following applies to the ratio V=l/d between the bearing length I and the bearing diameter d: 0.5≤V≤1.

4. The bearing arrangement according to one of claims 1 to 3, **characterized in that** the following applies to the ratio V=l/d between the bearing length I and the bearing diameter d: 0.6≤V≤0.9.

5. The bearing arrangement according to one of claims 1 to 4, **characterized in that** the following applies to the ratio V=l/d between the bearing length I and the bearing diameter d: 0.7≤V≤0.8.

6. The bearing arrangement according to one of claims 1 to 5, **characterized in that**
the axial plain bearing segments (17, 21) and radial plain bearing segments (25, 28) respectively comprise a plain bearing body (18, 22, 26, 29) which is supported on the respective sliding surface (19, 23, 27, 30) of the rotor (11),
the respective sliding surface (19, 23, 27, 30) of the rotor is metallic,
the respective plain bearing body (18, 22, 26, 29) comprise a preferably metallic base body which has a coating of PEEK (polyetheretherketone) on one side with which it is supported on the respective sliding surface (19, 23, 27, 30) of the rotor (11).

7. The bearing arrangement according to one of claims 1 to 5, **characterized in that**
the axial plain bearing segments (17, 21) and radial plain bearing segments (25, 28) respectively comprise a plain bearing body (18, 22, 26, 29) which is supported on the respective sliding surface (19, 23, 27, 30) of the rotor (11),
the respective sliding surface (19, 23, 27, 30) of the rotor is metallic,
the respective plain bearing body (18, 22, 26, 29) consists entirely of PEEK (polyetheretherketone).

8. The bearing arrangement according to one of claims 1 to 5, **characterized in that**
the axial plain bearing segments (17, 21) and radial plain bearing segments (25, 28) respectively comprise a plain bearing body (18, 22, 26, 29) which is supported on the respective sliding surface (19, 23, 27, 30) of the rotor (11),
the respective sliding surface (19, 23, 27, 30) of the rotor is metallic,
the respective plain bearing body (18, 22, 26, 29) comprise a preferably metallic base body which has a coating of PK (polyketone) on one side with which it is supported on the respective sliding surface (19, 23, 27, 30) of the rotor (11).

9. The bearing arrangement according to one of claims 1 to 5, **characterized in that**
the axial plain bearing segments (17, 21) and radial plain bearing segments (25, 28) respectively comprise a plain bearing body (18, 22, 26, 29) which is supported on the respective sliding surface (19, 23, 27, 30) of the rotor (11),
the respective sliding surface (19, 23, 27, 30) of the rotor is metallic,
the respective plain bearing body (18, 22, 26, 29) consists entirely of PK (polyketone).

10. A wind turbine, with a rotor (11) and a housing (12) and a bearing arrangement (10) for supporting a shaft of the rotor (11) in the housing (12),
the shaft (13) of the rotor in particular via a hub (14) being coupled with rotor blades of the rotor (11), **characterized in that** said a bearing arrangement (10) is formed according to one of claims 1 to 9.

11. The wind turbine according to claim 10, **characterized in that** it is a gearless direct-drive wind turbine.

## Revendications

1. Ensemble de paliers (10) d'un rotor (11) d'une éolienne, à savoir destiné à supporter un arbre (13) du rotor (11) dans un carter (12) immobile, dans lequel l'arbre (13) du rotor est couplé à des pales de rotor du rotor (11) en particulier par l'intermédiaire d'un moyeu (14),
avec de segments de palier lisse axial (17) côté carter tournés vers les pales de rotor ou le moyeu (14), qui s'engagent sur le carter (12), sont immobiles conjointement avec le carter (12) et prennent appui contre une première surface de glissement axiale (19) du rotor (11),
avec des segments de palier lisse axial (21) côté carter opposés aux pales de rotor ou au moyeu (14), lesquels s'engagent sur le carter (12), sont immobiles conjointement avec le carter (12) et prennent appui contre une deuxième surface de glissement axiale (23) du rotor (11),
avec des segments de palier lisse radial (25) côté carter tournés vers les pales de rotor ou le moyeu (14), lesquels s'engagent sur le carter (12), sont immobiles conjointement avec le carter (12) et prennent appui contre une première surface de glissement radiale (27) du rotor (11),
avec des segments de palier lisse radial (28) côté carter, opposés aux pales de rotor ou au moyeu (14), lesquels s'engagent sur le carter (12), sont immobiles conjointement avec le carter (12) et prennent appui contre une deuxième surface de glissement radiale (30) du rotor (11),
dans lequel un écart radial entre les surfaces de glissement axiales (19, 23) du rotor (11), sur lesquelles les segments de palier lisse axial (17, 21) prennent appui, définit une longueur de palier l de l'ensemble de paliers (10),
dans lequel les surfaces de glissement radiales (27, 30) du rotor (11), sur lesquelles les segments de palier lisse radial (25, 28) prennent appui, définissent un diamètre de palier d de l'ensemble de paliers (10),
dans lequel s'applique pour un rapport V = l / d entre la longueur de palier l entre les surfaces de glissement axiales (19, 23) du rotor (11) et le diamètre de palier d des surfaces de glissement radiales (27, 30) du rotor (11) : V ≤ l, **caractérisé en ce qu'**au moins un trou d'homme (31) est pratiqué entre les segments de palier lisse axial (17, 21) à peu près dans le centre axial de l'ensemble de paliers (10) dans l'arbre (13).

2. Ensemble de paliers selon la revendication 1, **caractérisé en ce que** s'applique pour le rapport V = l / d entre la longueur de palier l et le diamètre de palier d : 0,25 ≤ V ≤ l.

3. Ensemble de paliers selon la revendication 1 ou 2, **caractérisé en ce que** s'applique pour le rapport V = l / d entre la longueur de palier l et le diamètre de palier d : 0,5 ≤ V ≤ l.

4. Ensemble de paliers selon l'une quelconque des revendications 1 à 3, **caractérisé en ce que** s'applique pour le rapport V = l / d entre la longueur de palier l et le diamètre de palier d : 0,6 ≤ V ≤ 0,9.

5. Ensemble de paliers selon l'une quelconque des revendications 1 à 4, **caractérisé en ce que** s'applique pour le rapport V = l / d entre la longueur de palier l et le diamètre de palier d : 0,7 ≤ V ≤ 0,8.

6. Ensemble de paliers selon l'une quelconque des revendications 1 à 5, **caractérisé en ce que** les segments de palier lisse axial (17, 21) et les segments de palier lisse radial (25, 28) présentent respectivement un corps de palier lisse (18, 22, 26, 29), qui prend appui sur la surface de glissement (19, 23, 27, 30) respective du rotor (11),
la surface de glissement (19, 23, 27, 30) respective du rotor est métallique,
le corps de palier lisse (18, 22, 26, 29) respectif présente un corps de base de préférence métallique, qui porte un revêtement en PEEK (polyétheréthercétone) sur un côté, par lequel celui-ci prend appui sur la surface de glissement (19, 23, 27, 30) respective du rotor (11).

7. Ensemble de paliers selon l'une quelconque des revendications 1 à 5, **caractérisé en ce que** les segments de palier lisse axial (17, 21) et les segments de palier lisse radial (25, 28) présentent respectivement un corps de palier lisse (18, 22, 26, 29), qui prend appui sur la surface de glissement (19, 23, 27, 30) respective du rotor (11),
la surface de glissement (19, 23, 27, 30) respective du rotor est métallique,
le corps de palier lisse (18, 22, 26, 29) respectif est totalement constitué de PEEK (polyétheréthercétone).

8. Ensemble de paliers selon l'une quelconque des revendications 1 à 5, **caractérisé en ce que** les segments de palier lisse axial (17, 21) et les segments de palier lisse radial (25, 28) présentent respectivement un corps de palier lisse (18, 22, 26, 29), qui prend appui sur la surface de glissement (19, 23, 27, 30) respective du rotor (11),
la surface de glissement (19, 23, 27, 30) respective du rotor est métallique,
le corps de palier lisse (18, 22, 26, 29) respectif présente un corps de base de préférence métallique, qui porte un revêtement en PK (polycétone) sur un côté, par lequel celui-ci prend appui sur la surface de glissement (19, 23, 27, 30) respectif du rotor (11).

9. Ensemble de paliers selon l'une quelconque des revendications 1 à 5, **caractérisé en ce que** les segments de palier lisse axial (17, 21) et les segments de palier lisse radial (25, 28) présentent respectivement un corps de palier lisse (18, 22, 26, 29), qui prend appui sur la surface de glissement (19, 23, 27, 30) respective du rotor (11),
la surface de glissement (19, 23, 27, 30) respective du rotor est métallique,
le corps de palier lisse (18, 22, 26, 29) respectif est totalement constitué de PK (polycétone).

10. Eolienne avec un rotor (11) et un carter (12) et un ensemble de paliers (10) destiné à supporter un arbre du rotor (11) dans le carter (12), dans laquelle l'arbre (13) du rotor est couplé à des pales de rotor du rotor (11) en particulier par l'intermédiaire d'un moyeu (14), **caractérisée en ce que** l'ensemble de paliers (10) est réalisé selon l'une quelconque des revendications 1 à 9.

11. Eolienne selon la revendication 10, **caractérisée en ce que** celle-ci est une éolienne à entraînement direct sans transmission.
